# EUROPEAN PATENT APPLICATION

(11) **EP 3 476 956 A1**
(43) Date of publication of application: **01.05.2019**
(21) Application number: 17815258.3
(22) Date of filing: 14.06.2017
(51) Int. Cl.: C21D 9/36, C21D 1/10, H05B 6/10

(54) **INDUCTION HEATING APPARATUS AND INDUCTION HEATING METHOD**

(30) Priority: 24.06.2016 JP 2016125713; 16.05.2017 JP 2017097280
(71) Applicant: NTN Corporation, Osaka-shi, Osaka 550-0003 (JP)
(72) Inventor: SUZUKI Shintaro, Iwata-shi Shizuoka 438-8510 (JP); MANO Yoshiya, Iwata-shi Shizuoka 438-8510 (JP); TABUCHI Yuuki, Iwata-shi Shizuoka 438-8510 (JP)
(74) Representative: Grünecker Patent- und Rechtsanwälte PartG mbB
(86) International application number: PCT/JP2017/021990
(87) International publication number: WO 2017/221789

(57) **Abstract**

Provided is an induction heating apparatus (1) including a conveying device (10), which is configured to convey a rotatable workpiece (W) along a linear guiding conveyance path (P), and a heating coil (2), which is configured to inductively heat the workpiece (W) being conveyed along the guiding conveyance path (P). The conveying device (10) includes a first shaft member (11) and a second shaft member (12), which are arranged in parallel so as to be separated from each other, and a rotary mechanism (6), which is configured to rotationally drive at least one (second shaft member (12)) of the first shaft member (11) and the second shaft member (12) about an axis thereof. The second shaft member (12) is formed of a threaded shaft having a helical convex portion (13) formed along an outer periphery of the second shaft member (12). The guiding conveyance path (P) is formed by a groove bottom surface (15) of a helical groove (14) defined on the second shaft member (12) by the helical convex portion (13).

## Description

### Technical Field

The present invention relates to an induction heating apparatus and an induction heating method, which are to be used for inductively heating a workpiece.

### Background Art

For example, in a manufacturing process of a workpiece for which a high mechanical strength and a high hardness are required as in a case of a rolling element such as a roller which forms a rolling bearing, a heat treatment (quench hardening) for applying, for example, the mechanical strength required for the workpiece is carried out. The heat treatment includes, for example, a heating step of heating the workpiece being a target of the heat treatment to a target temperature and a cooling step of cooling the heated workpiece. The heating step can be carried out, for example, using an atmosphere heating furnace such as a mesh belt-type continuous furnace. However, the atmosphere heating furnace requires heating of an atmosphere at the same time. Therefore, there arise problems such as low energy efficiency and increase in size of a heat treatment apparatus.

Therefore, for example, as disclosed in Patent Literature 1, in some cases, the workpiece is heated using a high-frequency induction heating apparatus in the heating step described above. With the induction heating, the following advantages are provided. Specifically, only the workpiece can be directly heated, and hence high energy efficiency can be achieved. Besides, a compact heat treatment apparatus can be achieved.

The induction heating apparatus disclosed in Patent Literature 1 includes a guide pipe as a guide member, which is configured to guide and move the workpiece, a heating coil, which is arranged on an outer periphery of the guide pipe and is configured to inductively heat the workpiece moved inside the guide pipe, and a pushing part, which is provided on an inlet side of the guide pipe and is configured to sequentially push the workpieces into the guide pipe. In this case, along with the pushing of a subsequent workpiece into the guide pipe, a feed force is applied to the workpiece in the guide pipe.

### Citation List

Patent Literature 1: JP 2005-331005 A
Patent Literature 2: JP 2009-84664 A

### Summary of Invention

### Technical Problem

In the induction heating apparatus disclosed in Patent Literature 1, the workpiece is inductively heated while being moved in a given posture inside the guide pipe. Therefore, a difference is liable to be generated in heating temperature between a region of the workpiece, which is in contact with the guide pipe, and a remaining region. Thus, temperature unevenness is liable to occur in the workpiece after the completion of heating. As a result, there is a possibility that a desired mechanical strength cannot be provided to the workpiece.

It is conceivable that the above-mentioned problem can be eliminated as much as possible by vibrating a guide member configured to guide and move the workpiece as disclosed in, for example, Patent Literature 2. Even when the guide member is vibrated, however, the workpiece cannot necessarily be inductively heated while the posture of the workpiece is being appropriately changed.

In view of the actual circumstances described above, the present invention has an object to provide a technical measure capable of inductively heating a workpiece (in particular, a rotatable workpiece) in a uniform manner without temperature unevenness so as to appropriately and efficiently heat the workpiece to a target temperature.

### Solution to Problem

In order to achieve the above-mentioned object, according to one embodiment of the present invention, there is provided an induction heating apparatus, comprising: a conveying device, which is configured to convey a rotatable workpiece along a linear guiding conveyance path; and a heating coil, which is configured to inductively heat the workpiece being conveyed along the guiding conveyance path, wherein the conveying device comprises a first shaft member and a second shaft member, which are arranged in parallel so as to be separated from each other and are configured to form the guiding conveyance path in cooperation with each other, and a rotary mechanism , which is configured to rotationally drive at least one shaft member of the first shaft member and the second shaft member about an axis of the at least one shaft member, and wherein the at least one shaft member is formed of a threaded shaft having a helical convex portion formed along an outer periphery of the at least one shaft member, and the guiding conveyance path is formed by a groove bottom surface of a helical groove defined on the one shaft member by the convex portion and a surface of another shaft member of the first shaft member and the second shaft member, which is opposed to the groove bottom surface.

As the "rotatable workpiece" in the present invention, there can be exemplified a rolling element for a rolling bearing. The term "rolling bearing" herein encompasses the concepts of a ball bearing, a cylindrical roller bearing, a tapered roller bearing, and a needle roller bearing. Therefore, the term "rolling element" encompasses the concepts of a ball, a cylindrical roller, a tapered roller, and a needle roller.

When the induction heating apparatus having the configuration described above is used, the workpiece, which is a target to be heated, is introduced into the guiding conveyance path formed in the conveying device and then is conveyed along the guiding conveyance path. The guiding conveyance path is formed by the groove bottom surface of the helical groove defined on at least one shaft member (threaded shaft) of the first shaft member and the second shaft member, which are arranged in parallel so as to be separated from each other, and the surface of the another shaft member, which is opposed to the groove bottom surface. Therefore, the workpiece, which is the target to be heated, is arranged in the helical groove and has a portion that is brought into contact with the groove bottom surface of the helical groove. The helical groove is defined and formed by the helical convex portion. Thus, when the threaded shaft is rotationally driven about the axis thereof under a state in which the workpiece is arranged in the helical groove (in the guiding conveyance path), a feed force for conveying the workpiece along the guiding conveyance path and a rotative force for rotating the workpiece (more specifically, a rotative force in a direction opposite to a direction of rotation of the threaded shaft) can be applied simultaneously and continuously to the workpiece. Therefore, the workpiece, which is conveyed along the guiding conveyance path, can be inductively heated while being rotated. As a result, the workpiece can be inductively heated in an efficient and uniform manner without temperature unevenness.

Further, with the conveying device having the configuration described above, the workpiece can be conveyed along the guiding conveyance path even without being pushed by a subsequent workpiece as disclosed in Patent Literature 1. Thus, the conveying device can be suitably applicable even to a case in which the single workpiece is the target to be heated or the workpieces are in a small lot of several pieces. As a result, a target range of application of the induction heating apparatus can be expanded to enhance general versatility.

Further, when the induction heating is carried out under a state in which each of the workpieces is in contact with the workpiece adjacent thereto in a conveying direction therefor as disclosed in Patent Literature 1, the workpieces may be welded to each other to render the workpieces after completion of heating unusable as products. Further, even when the workpieces are not welded to each other, each of the workpieces is, for example, thermally affected by the workpiece adjacent thereto. Therefore, each of the workpieces may be prevented from being heated in a predetermined mode. Therefore, when a plurality of workpieces are conveyed along the guiding conveyance path, it is preferred that two adjacent ones of the workpieces be conveyed in a state of being separated from each other. In this regard, in the induction heating apparatus according to the present invention, the guiding conveyance path is formed by the groove bottom surface of the helical groove. Therefore, only when a pitch of the convex portion, specifically, a dimension of the groove bottom surface of the helical groove in a direction along the guiding conveyance path is appropriately set, two adjacent ones of the workpieces can be conveyed in a state of being reliably separated from each other. Therefore, even in this regard, the workpiece can be heated with high accuracy.

The another shaft member of the first shaft member and the second shaft member can be formed not only of a threaded shaft similar to the one shaft member but also of a columnar shaft having a constant diameter. When the another shaft member is formed of the columnar shaft, a shape of the another shaft member can be simplified to enable reduction of manufacturing cost thereof. Thus, the induction heating apparatus capable of providing the functions and effects described above can be achieved at low cost. In this case, the guiding conveyance path is formed by the groove bottom surface of the helical groove and a radially outer surface of the columnar shaft.

When an axis of the first shaft member and an axis of the second shaft member are positioned at the same height (on the same plane), a risk of deviation of the workpiece from the guiding conveyance path can be effectively reduced.

The rotary mechanism may be configured to rotationally drive the first shaft member and the second shaft member at the same velocity in the same direction. In this manner, the workpiece, which is conveyed along the guiding conveyance path, can be smoothly rotated.

The one shaft member (threaded shaft) of the first shaft member and the second shaft member may be arranged relatively on an upper side, and the another shaft member may be arranged relatively on a lower side. In this case, the guiding conveyance path can be formed by the groove bottom surface of the helical groove and a workpiece support surface formed on the another shaft member.

In the above-mentioned configuration, it is preferred that each of the first shaft member and the second shaft member be made of a non-magnetic material. The reason is as follows. When both of the shaft members is made of a magnetic material such as a metal, not only the workpiece but also the shaft members are inductively heated. Hence, the shaft members may be, for example, softened and molten to adversely affect shape accuracy of the shaft members, and in turn, adversely affect support accuracy and conveyance accuracy of the workpiece.

With a heat treatment apparatus comprising the induction heating apparatus having the configuration described above according to the present invention and a cooling device, which is configured to cool the workpiece discharged from the induction heating apparatus, specifically, the workpiece after the completion of heating, quench hardening is appropriately performed on the workpiece. As a result, the workpiece having a desired mechanical strength can be easily and reliably obtained.

Further, the above-mentioned object can also be achieved by an induction heating method according to the present invention, that is, an induction heating method for inductively heating rotatable workpieces to a target temperature by energizing a heating coil arranged on an outside of a linear guiding conveyance path while conveying the workpieces along the guiding conveyance path, the induction heating method comprising simultaneously rotating and conveying each of the workpieces sequentially introduced into the guiding conveyance path.

In the above-mentioned configuration, it is preferred that each of the workpieces sequentially introduced into the guiding conveyance path be conveyed while being rotated under a non-contact state with an adjacent one of the workpieces.

### Advantageous Effects of Invention

As described above, according to one embodiment of the present invention, the workpiece, which is the target to be heated, can be inductively heated in a uniform manner without temperature unevenness. As a result, each of the plurality of workpieces can be inductively heated to the target temperature in an appropriate and efficient manner.

### Brief Description of Drawings

FIG. 1 is a schematic view for illustrating an overall structure of a heat treatment apparatus comprising an induction heating apparatus according to an embodiment of the present invention.
FIG. 2 is a schematic side view of the induction heating apparatus according to the embodiment of the present invention.
FIG. 3 is a schematic front view of the induction heating apparatus.
FIG. 4 is a partially enlarged plan view of the induction heating apparatus.
FIG. 5A is a partially enlarged plan view of a conveying device included in the induction heating apparatus.
FIG. 5B is a schematic sectional view taken along the line B-B of FIG. 5A as seen in the direction indicated by the arrows.
FIG. 6A is a partially enlarged plan view of the conveying device in a case in which a posture of a workpiece being conveyed is different.
FIG. 6B is a schematic sectional view taken along the line B-B of FIG. 6A as seen in the direction indicated by the arrows.
FIG. 7 is a schematic view for illustrating an example of a support mode for a first shaft member and a second shaft member which are included in the conveying device.
FIG. 8 is a transverse sectional view of a main part of the conveying device according to another embodiment of the present invention.

### Description of Embodiments

Now, description is made of embodiments of the present invention with reference to the drawings.

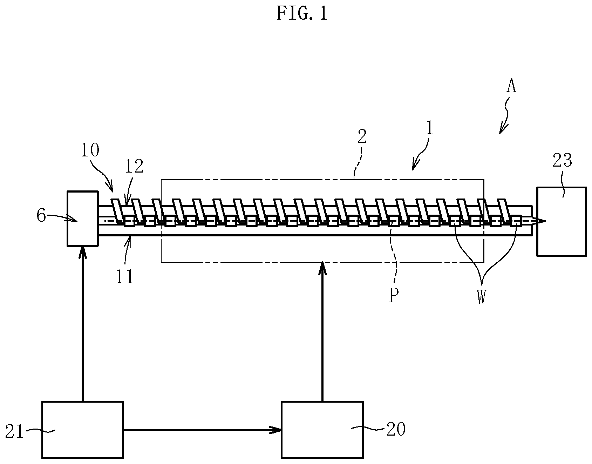

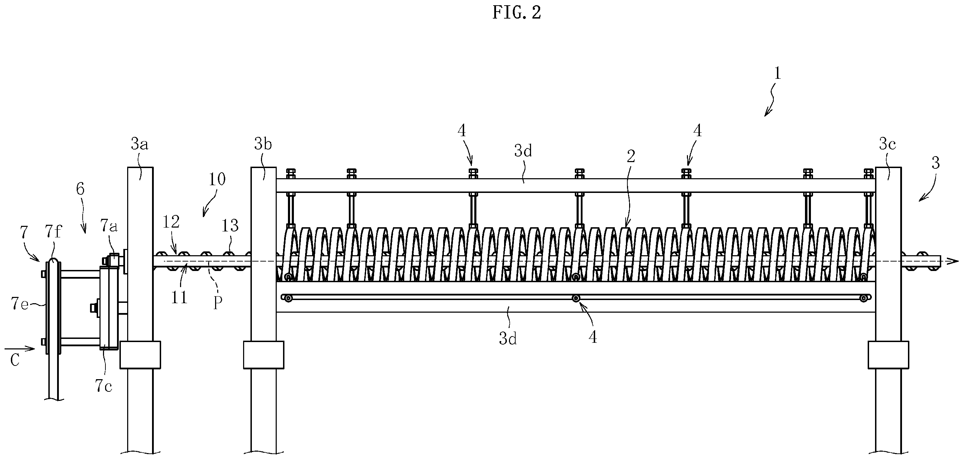

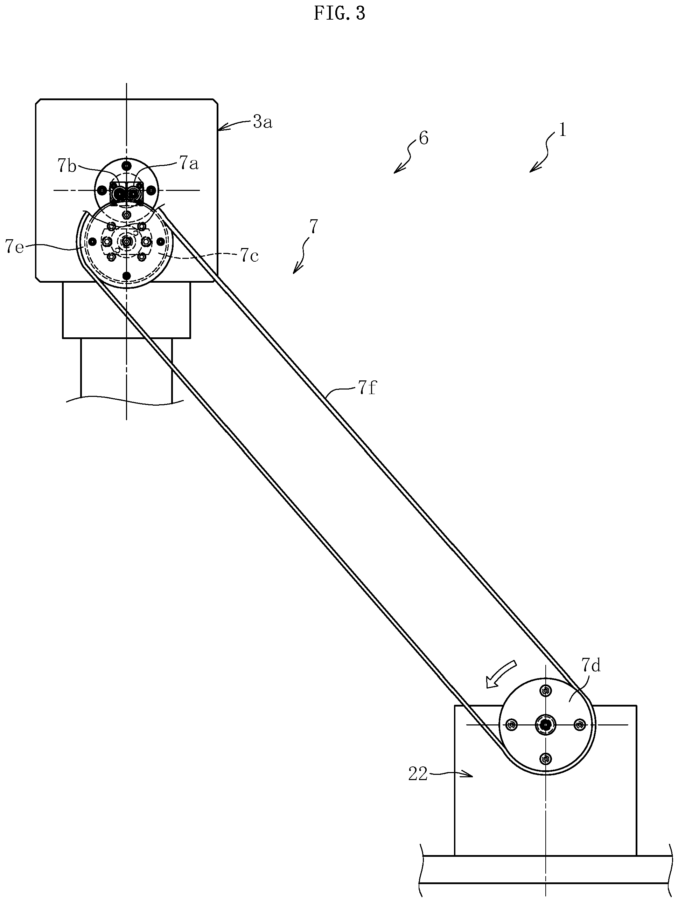

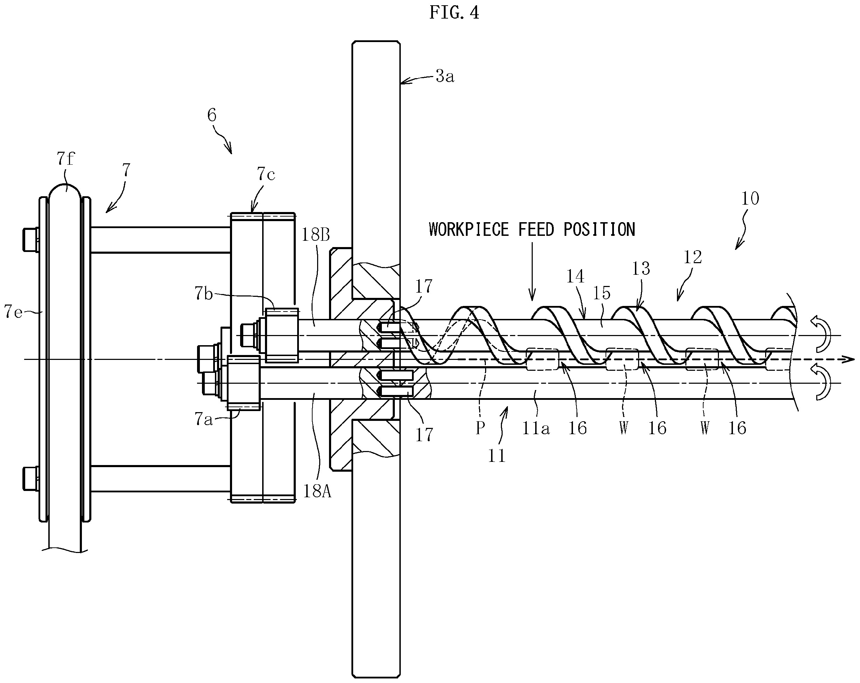

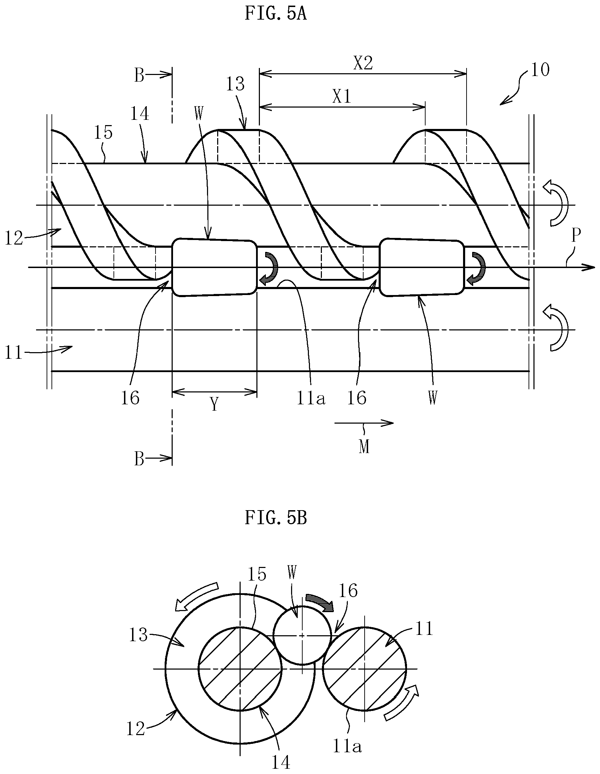

FIG. 1 is a schematic view for illustrating an overall structure of a heat treatment apparatus A comprising an induction heating apparatus 1 according to an embodiment of the present invention, FIG. 2 is a schematic side view of the induction heating apparatus 1, and FIG. 3 is a schematic front view of the induction heating apparatus 1, specifically, a view of FIG. 2 as seen in the direction indicated by the arrow C of FIG. 2. The heat treatment apparatus A illustrated in FIG. 1 is used to perform quench hardening on a workpiece W made of a conducive metal and is configured to inductively heat the workpiece W to a target temperature while conveying the workpiece W along a linear guiding conveyance path P and then cool the workpiece W. Embodiments of the present invention are described below, taking a case in which the quench hardening is performed on a rolling element (tapered roller) for a tapered roller bearing, which is a kind of rolling bearing, as a representative example. In short, the workpiece W of this embodiment is the tapered roller, specifically, a base material for the tapered roller, as illustrated in, for example, FIG. 4, FIG. 5A, and FIG. 5B.

As illustrated in FIG. 1, the heat treatment apparatus A comprises the induction heating apparatus 1 and a cooling section 23. The induction heating apparatus 1 is configured to inductively heat the workpiece W to the target temperature while conveying the workpiece W along the linear guiding conveyance path P. The cooling section 23 as a cooling device is configured to cool the workpiece W discharged from the induction heating apparatus 1. The cooling section 23 is formed of, for example, a cooling liquid bath in which a cooling liquid such as quenching oil is stored.

As illustrated in FIG. 1 and FIG. 2, the induction heating apparatus 1 comprises a conveying device 10, a heating coil 2, a frame body 3, a high-frequency power supply 20, and a controller 21. The conveying device 10 is configured to convey the workpiece W along the linear guiding conveyance path P. The heating coil 2 is configured to inductively heat the workpiece W that is being conveyed along the guiding conveyance path P. The frame body 3 is configured to support the heating coil 2 and (part of) the conveying device 10. The high-frequency power supply 20 is configured to supply a high-frequency current to the heating coil 2. The controller 21 is configured to control, for example, an output of the high-frequency power supply 20. The frame body 3 of this embodiment comprises a first base frame 3a, a second base frame 3b, a third base frame 3c, and crossbars 3d. The first base frame 3a, the second base frame 3b, and the third base frame 3c are provided upright at three positions separated from each other in an axial direction of the heating coil 2. Each of the crossbars 3d extends in the axial direction and has one end and another end which are respectively fixed to the second base frame 3b and the third base frame 3c. Although detailed illustration is omitted, the crossbars 3d are provided at three positions so as to be separated from each other at equal intervals in a circumferential direction of the heating coil 2.

The heating coil 2 is a helical coil (multiwinding coil) formed by helically winding a tubular body made of a conductive metal, for example, a copper pipe, and is supported on the crossbars 3d of the frame body 3 through intermediation of bolt members 4. As the heating coil 2, a heating coil having a total length dimension sufficiently larger than a total length dimension of the workpiece W is used so that a plurality of workpieces W can be inductively heated at the same time. For example, when the workpiece W having a total length dimension Y (see FIG. 5A) of about 15 mm is to be inductively heated, the heating coil 2 having a total length dimension of 600 mm or longer can be used. One end and another end of the heating coil 2 are electrically connected to the high-frequency power supply 20 illustrated in FIG. 1. The high-frequency power supply 20 is electrically connected to the controller 21 illustrated in FIG. 1 and supplies a predetermined magnitude of high-frequency current to the heating coil 2 at predetermined timing based on a signal output from the controller 21.

Although not specifically illustrated, the induction heating device 1 may comprise a cooling circuit configured to cool the heating coil 2. When such cooling circuit described above is provided, a temperature of the heating coil 2 can be appropriately and efficiently controlled. Thus, the rod-shaped workpiece W can be inductively heated to a target temperature in an accurate and efficient manner. The formation of the heating coil 2 of the tubular body allows the formation of the cooling circuit by, for example, connecting the heating coil 2, specifically, a hollow portion thereof, and a cooling liquid tank in which the cooling liquid is stored through a pipe and providing a pump to the pipe.

As illustrated in FIG. 2 and FIG. 4, the conveying device 10 comprises a first shaft member 11, a second shaft member 12, and a rotary mechanism 6. The first shaft member 11 and the second shaft member 12 are arranged in parallel inside an inner periphery of the heating coil 2 so as to be separated from each other. The rotary mechanism 6 is configured to rotate at least one of the shaft members 11 and 12 about an axis thereof. In this embodiment, the rotary mechanism 6 rotates both of the shaft members 11 and 12 about axes thereof, and details thereof are described later. As illustrated in FIG. 5B, the shaft members 11 and 12 are supported on the frame body 3 so as to be freely rotatable under a state in which the axes (centers of rotation) thereof are positioned at the same height (on the same plane). Each of the shaft members 11 and 12 is longer than the heating coil 2 and has one end and another end, which project outside from the heating coil 2.

As illustrated in FIG. 4 and FIG. 5B, the first shaft member 11 is formed of a columnar shaft having a cylindrical surface with a constant diameter as a radially outer surface 11a, whereas the second shaft member 12 is formed of a threaded shaft having a helical convex portion 13 formed along an outer periphery thereof. Both of the first shaft member 11 and the second shaft member 12 are made of a non-magnetic material. As the non-magnetic material, ceramic (for example, alumina, zirconia, or silicon carbide) having a high hardness and an excellent heat resistance can be suitably used.

As illustrated in FIG. 4, FIG. 5A, and FIG. 5B, a groove bottom surface 15 of a helical groove 14 defined on the outer periphery of the second shaft member 12 by the helical convex portion 13 forms the guiding conveyance path P and workpiece support portions 16 in cooperation with the radially outer surface 11a of the first shaft member 11, which is opposed thereto. The guiding conveyance path P and the workpiece support portions 16 are configured to guide and convey the workpieces W. In this embodiment, an outer peripheral surface of the workpiece W is supported in the workpiece support portion 16 in a contact manner. A pitch and a width dimension of the convex portion 13 are set so that a groove width XI of the helical groove 14 and the total length dimension Y of the workpiece W satisfy a relational expression: Y<X1. Based on the description given above, in the conveying device 10, the linear guiding conveyance path P is formed by the cooperation between the first shaft member 11 and the second shaft member 12. At the same time, the workpiece support portions 16, which are respectively capable of supporting the workpieces W in a contact manner, are formed at a plurality of positions that are separated from each other in a direction of extension of the guiding conveyance path P.

As illustrated in FIG. 2 to FIG. 4, the rotary mechanism 6 comprises an electric motor 22, for example, a servomotor, and a power transmission mechanism 7. The power transmission mechanism 7 is configured to transmit rotary power of the electric motor 22 to both of the shaft members 11 and 12. The power transmission mechanism 7 comprises a gear shaft 18A, a gear shaft 18B, a large gear 7c, a drive pulley 7d, a driven pulley 7e, and an endless belt member 7f. The gear shaft 18A has a small gear 7a and is coupled to one end of the first shaft member 11 through intermediation of coupling pins 17. The gear shaft 18B has a small gear 7b and is coupled to one end of the second shaft member 12 through intermediation of the coupling pins 17. The large gear 7c is supported on the frame body 3 so as to be freely rotatable and meshes with both of the small gears 7a and 7b. The drive pulley 7d is coupled to an output shaft of the electric motor 22. The driven pulley 7e is coupled to the large gear 7c. The endless belt member 7f, which may also be a chain, is looped over outer peripheral surfaces of the pulleys 7d and 7e. A tooth flank pitch of the small gear 7a and a tooth flank pitch of the small gear 7b are the same. Further, a tooth flank pitch of part of the large gear 7c, which meshes with the small gear 7a, and a tooth flank pitch of part of the large gear 7c, which meshes with the small gear 7b, are the same. With the power transmission mechanism 7 having the configuration described above, specifically, the rotary mechanism 6, when the electric motor 22 is driven, the first shaft member 11 and the second shaft member 12 are rotationally driven at the same velocity in the same direction. The electric motor 22 is electrically connected to a power supply (not shown) and the controller 21 illustrated in FIG. 1, and is rotationally driven at a predetermined velocity based on a signal output from the controller 21.

When the heat treatment apparatus A having the configuration described above is used, the quench hardening for the workpiece W is carried out in the following mode.

First, by driving the electric motor 22, the first shaft member 11 and the second shaft member 12 are rotationally driven about the axes thereof, respectively (see the outlined arrows in FIG. 4). At the same time, the heating coil 2 is energized. Then, the workpiece W is fed from a workpiece feed position illustrated in FIG. 4 to the conveying device 10 so that the outer peripheral surface of the workpiece W is supported in the workpiece support portion 16 in a contact manner. As described above, the workpiece support portions 16 and the guiding conveyance path P are formed by the groove bottom surface 15 of the helical groove 14 defined on the second shaft member 12 formed of the threaded shaft. Therefore, while both of the shaft members 11 and 12 are being rotated about the axes thereof by driving the conveying device 10, specifically, by driving the electric motor 22, a feed force for conveying the workpiece W along the guiding conveyance path P is continuously applied to the workpiece W, which is supported in the workpiece support portion 16 in a contact manner. As a result, the workpiece W is inductively heated to the target temperature by the heating coil 2 in an energized state while being conveyed along the guiding conveyance path P, specifically, while being guided and moved along the radially outer surface 11a of the first shaft member 11. Then, as illustrated in FIG. 1, the workpiece W having been discharged from the heating coil 2 is fed, due to a free fall, into the cooling liquid stored in the cooling section 23, and is cooled to a temperature falling within a predetermined temperature range to be quench-hardened.

When the workpiece W is conveyed in the above-mentioned mode, both of the shaft members 11 and 12, which support the outer peripheral surface of the workpiece W in a contact manner, are rotationally driven in the same direction. Thus, a rotative force for rotating the workpiece W about the axis thereof is continuously applied to the workpiece W as indicated by the black arrows in FIG. 5A and FIG. 5B.

As described above, while the conveying device 10 is being driven, not only the feed force along the direction of extension of the guiding conveyance path P but also the rotative force for rotating the workpiece W about the axis thereof is continuously applied to the workpiece W, which is supported in the workpiece support portion 16 in a contact manner. Thus, the workpiece W, which is conveyed along the guiding conveyance path P, is inductively heated while being rotated about the axis thereof. In this manner, the workpiece W can be inductively heated throughout portions in a uniform manner so that occurrence of the temperature unevenness in the workpiece W after the completion of heating can be effectively prevented. Therefore, when the workpiece W after the completion of heating is cooled, the workpiece W of high quality without a difference in mechanical strength between portions in the circumferential direction and a cross-sectional direction can be obtained.

In particular, the rotary mechanism 6 of this embodiment is configured to rotationally drive the first shaft member 11 and the second shaft member 12 at the same velocity in the same direction. Therefore, the workpiece W, which is supported in the workpiece support portion 16 in a contact manner, can be continuously rotated about the axis thereof in a smooth manner. Further, both of the shaft members 11 and 12 are made of a ceramic, which is a kind of non-magnetic material. Therefore, the shaft members 11 and 12 themselves can be prevented from being inductively heated to be, for example, softened or molten. As a result, the workpiece W can be supported and conveyed with high accuracy. Therefore, the occurrence of temperature unevenness in the workpiece W after the completion of heating can be more efficiently prevented to further enhance heating accuracy for the workpiece W.

In this embodiment, the workpieces W are fed one by one at predetermined intervals from the workpiece feed position illustrated in FIG. 4 to the conveying device 10 so that the plurality of workpieces W can be inductively heated in a simultaneous manner while being conveyed under a state in which the plurality of workpieces W are separated from each other. In this case, for example, the following problem can be prevented from arising as much as possible. Specifically, the workpieces W are welded together due to mutual contact between the workpieces W being currently conveyed (being currently inductively heated), or each of the workpieces W is thermally affected by the workpiece W adjacent thereto. Thus, the workpiece W can be more accurately heated. For example, when the groove width X1 of the helical groove 14 and the axial dimension Y of the workpiece W are determined to satisfy the relational expression: X1<2Y, only the single workpiece W is supported in each of the workpiece support portions 16 in a contact manner. In this case, the plurality of workpieces W can be conveyed and heated in a state of being reliably separated from each other. Therefore, possibility that each of the workpieces W may be thermally affected by the workpiece W adjacent thereto can be further effectively reduced.

Further, with the conveying device 10 described above, the workpiece W can be conveyed even without being pushed by the subsequent workpiece as in the case disclosed in Patent Literature 1. Therefore, the induction heating apparatus 2 comprising the conveying device 10 has excellent general versatility so as be suitably applicable even to a case in which the single workpiece W is the target to be heated or the workpieces W are in a small lot of several pieces. In addition, the induction heating apparatus 1 can heat each of the workpieces W with high accuracy.

In the embodiment described above, as illustrated in FIG. 5A and FIG. 5B, the outer peripheral surface of the workpiece W is supported in the workpiece support portion 16 in a contact manner, and the workpiece W is conveyed along the axial direction thereof. However, a support mode for the workpiece W by the workpiece support portion 16, specifically, the posture of the workpiece W during the conveyance is not limited to that described above.

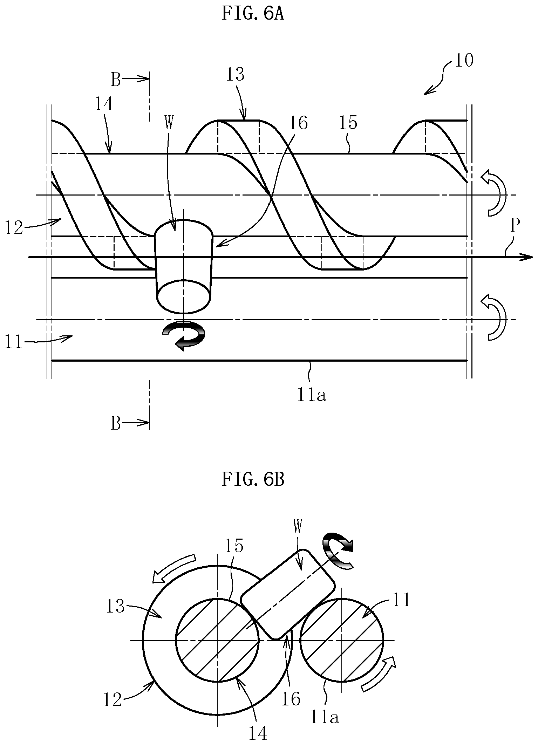

Specifically, for example, as illustrated in FIG. 6A and FIG. 6B, one end surface of the workpiece W may be supported on the groove bottom surface 15 of the helical groove 14 of the second shaft member 12 in a contact manner, whereas the outer peripheral surface thereof may be supported on the radially outer surface 11a of the first shaft member 11 in a contact manner. In this case, the workpiece W is conveyed along the guiding conveyance path P under a state in which the axis of the workpiece W intersects with (is orthogonal to) the direction of extension of the guiding conveyance path P.

When the outer peripheral surface of the workpiece W is supported in the workpiece support portion 16 in a contact manner as illustrated in FIG. 5A and FIG. 5B, the workpiece W is conveyed in a rolling contact manner while the outer peripheral surface thereof is sliding against the radially outer surface 11a of the first shaft member 11 and the groove bottom surface 15 of the second shaft member 12. On the other hand, when the workpiece W is supported and conveyed in the mode illustrated in FIG. 6A and FIG. 6B, the workpiece W is conveyed in a rolling contact manner without the slide of the outer peripheral surface thereof against the radially outer surface 11a of the first shaft member 11 and the helical convex portion 13 of the second shaft member 12. Therefore, the mode illustrated in FIG. 6A and FIG. 6B is advantageous in prevention of the occurrence of temperature unevenness on the outer peripheral surface of the workpiece W after the completion of heating and in prevention of generation of a microdefect such as a flaw on the outer peripheral surface of the workpiece W. In particular, when the workpiece W is the tapered roller, specifically, the base material for the tapered roller as in this embodiment, or a cylindrical roller, specifically, a base material for the cylindrical roller, it is preferred that the workpiece W be supported and conveyed in the mode illustrated in FIG. 6A and FIG. 6B. The reason is as follows. An outer peripheral surface of the tapered roller or an outer peripheral surface of the cylindrical roller is a surface that rolls along raceway surfaces of an inner ring and an outer ring, which form a roller bearing, and requires high shape accuracy and a high mechanical strength.

Although the induction heating apparatus 1 according to one embodiment of the present invention has been described above, various modifications are possible for the induction heating apparatus 1 without departing from the gist of the present invention.

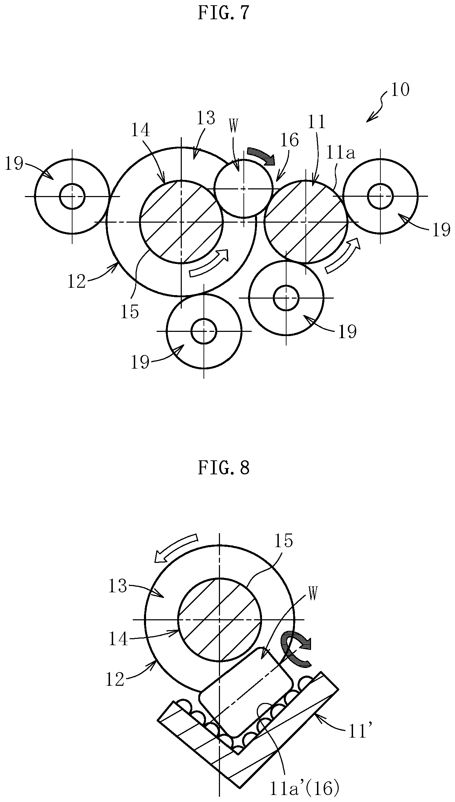

For example, when, in particular, long shaft members are used as the first shaft member 11 and the second shaft member 12, which are included in the conveying device 10, support members (support rollers) 19 may be provided as illustrated in FIG. 7. The support members 19 are configured to support in a contact manner regions of an outer peripheral surface of the first shaft member 11 and an outer peripheral surface of the second shaft member 12 other than regions that form the workpiece support portions 16. When the support rollers 19 are provided, deflection can be prevented from being caused in the shaft members 11 and 12 as much as possible. Therefore, the workpiece W can be supported and conveyed with high accuracy, and hence the workpiece W can be heated with high accuracy. Although detailed illustration is omitted, the support rollers 19 may be provided to the second base frame 3b and the third base frame 3c in the induction heating apparatus 1 illustrated in FIG. 2.

Further, when both of the shaft members 11 and 12 are rotationally driven as in the embodiment described above, a rotation velocity of the first shaft member 11 about the axis thereof and a rotation velocity of the second shaft member 12 about the axis thereof are not necessarily required to be the same and may be different from each other. In order to set the rotation velocity of the first shaft member 11 and the rotation velocity of the second shaft member 12 different from each other, for example, the tooth flank pitch of the small gear 7a provided to the first shaft member 11 and the large gear 7c that meshes therewith and the tooth flank pitch of the small gear 7b provided to the second shaft member 12 and the large gear 7c that meshes therewith are only required to be set different from each other. Further, even when both the shaft members 11 and 12 are rotationally driven, the rotary mechanism 6 having a configuration different from the above-mentioned configuration of the rotary mechanism 6 may be adopted. For example, two electric motors may be provided so that the first shaft member 11 is coupled to an output shaft of one of the electric motors and the second shaft member 12 is coupled to an output shaft of another one of the electric motors.

Further, although the first shaft member 11 and the second shaft member 12 are rotationally driven (synchronously rotated) at the same velocity in the same direction to apply the rotative force to the workpiece W that is conveyed along the guiding conveyance path P in the embodiment described above, the rotative force described above can also be applied to the workpiece W by rotationally driving only the shaft member formed of the threaded shaft (second shaft member 12 in the embodiment described above). Therefore, the rotary mechanism 6 may be configured to rotationally drive only the shaft member formed of the threaded shaft. In this case, a complex mechanism, specifically, the power transmission mechanism 8, which is configured to synchronously rotate the shaft members 11 and 12, is not required to be provided. Thus, the conveying device 10 can be simplified and reduced in cost.

Further, although one shaft member (second shaft member 12) of the shaft members 11 and 12 is formed of the threaded shaft in the embodiment described above, another shaft member (first shaft member 11) thereof may also be formed of a threaded shaft similar to the one shaft member described above (not shown). In this case, the guiding conveyance path P and the workpiece support portions 16 are formed by the groove bottom surfaces 15 of the helical grooves 14, which are respectively formed on the shaft members 11 and 12.

Further, the number of heating coil 2 is not limited to one and may be plural so as to be arranged along the direction of extension of the guiding conveyance path P.

Further, although the first shaft member 11 and the second shaft member 12 are arranged so that a center of rotation of the first shaft member 11 and a center of rotation of the second shaft member 12 are positioned at the same height in the embodiment described above, a height at which the first shaft member 11 is arranged and a height at which the second shaft member 12 is arranged may be different from each other as illustrated in, for example, FIG. 8. In FIG. 8, the second shaft member 12 formed of the threaded shaft is arranged relatively on an upper side, whereas a first shaft member 11' having an approximately L-shaped cross section is arranged relatively on a lower side. In this case, the guiding conveyance path P is formed by the groove bottom surface 15 of the helical groove 14 formed on the second shaft member 12 and a workpiece support surface 11a' of the first shaft member 11', and the workpiece support portions 16 are formed by the workpiece support surface 11a' of the first shaft member 11'. According to the configuration described above, the workpieces W are supported on the workpiece support surface 11a' of the first shaft member 11', which forms the workpiece support portions 16, more specifically, regions of the workpiece support surface 11a', which are opposed to the groove bottom surface 15 of the helical groove 14, in a contact manner. When the second shaft member 12 is rotationally driven about the axis thereof under the above-mentioned state, the feed force in the direction along the guiding conveyance path P and the rotative force in the direction indicated by the black arrow in FIG. 8 are applied to the workpiece W. In this case, in view of reduction of a contact area of the workpiece W with the workpiece support surface 11a' of the first shaft member 11' as much as possible, it is preferred that the workpiece support surface 11a' be formed to have a concave-convex shape as in the illustrated example so that the workpiece W is supported at a plurality of positions in point contact with the workpiece support surface 11a'.

Although the tapered roller which forms the tapered roller bearing has been exemplified above as the workpiece W being the target to be heated by the induction heating apparatus 1 according to the embodiments of the present invention, the induction heating apparatus 1 can be suitably used even in a case in which rolling elements for other rolling bearings such as a ball which forms a ball bearing, a cylindrical roller which forms a cylindrical roller bearing, and a needle roller which forms a needle roller bearing are inductively heated. The induction heating apparatus 1 according to the embodiments of the present invention can be suitably used to inductively heat not only the solid workpiece W such as various rolling elements described above but also the hollow workpiece W. In short, the induction heating apparatus 1 according to the present invention can be used for any kind of workpiece as long as the workpiece W, which is rotatable along with the rotational drive of any one or both of the shaft members 11 and 12 included in the conveying device 10 about the axis (axes) thereof, is inductively heated.

The present invention is not limited to the above-mentioned embodiments. The present invention may be carried out in various modes without departing from the spirit of the present invention. The scope of the present invention is defined in claims, and encompasses equivalents described in claims and all changes within the scope of claims.

### Reference Signs List

- 1: induction heating apparatus
- 2: heating coil
- 3: frame body
- 6: rotary mechanism
- 7: power transmission mechanism
- 10: conveying device
- 11: first shaft member
- 12: second shaft member
- 13: helical convex portion
- 14: helical groove
- 15: groove bottom surface
- 16: workpiece support portion
- 20: high-frequency power supply
- 23: cooling section (cooling device)
- A: heat treatment apparatus
- P: guiding conveyance path
- W: workpiece

## Claims

1. An induction heating apparatus, comprising:
a conveying device, which is configured to convey a rotatable workpiece along a linear guiding conveyance path; and
a heating coil, which is configured to inductively heat the workpiece being conveyed along the guiding conveyance path,
wherein the conveying device comprises a first shaft member and a second shaft member, which are arranged in parallel so as to be separated from each other and are configured to form the guiding conveyance path in cooperation with each other, and a rotary mechanism , which is configured to rotationally drive at least one shaft member of the first shaft member and the second shaft member about an axis of the at least one shaft member, and
wherein the at least one shaft member is formed of a threaded shaft having a helical convex portion formed along an outer periphery of the at least one shaft member, and the guiding conveyance path is formed by a groove bottom surface of a helical groove defined on the one shaft member by the convex portion and a surface of another shaft member of the first shaft member and the second shaft member, which is opposed to the groove bottom surface.

2. The induction heating apparatus according to claim 1, wherein the another shaft member is formed of a columnar shaft having a constant diameter, and the guiding conveyance path is formed by the groove bottom surface of the helical groove and a radially outer surface of the columnar shaft.

3. The induction heating apparatus according to claim 1 or 2, wherein an axis of the first shaft member and an axis of the second shaft member are positioned at the same height.

4. The induction heating apparatus according to any one of claims 1 to 3, wherein the rotary mechanism is configured to rotationally drive the first shaft member and the second shaft member at the same velocity in the same direction.

5. The induction heating apparatus according to claim 1,
wherein the one shaft member is arranged relatively on an upper side, and the another shaft member is arranged relatively on a lower side, and
wherein the guiding conveyance path is formed by the groove bottom surface of the helical groove and a workpiece support surface formed on the another shaft member.

6. The induction heating apparatus according to any one of claims 1 to 5, wherein each of the first shaft member and the second shaft member is made of a non-magnetic material.

7. The induction heating apparatus according to any one of claims 1 to 6, wherein the workpiece comprises a rolling element, which forms a rolling bearing.

8. A heat treatment apparatus, comprising:
the induction heating apparatus according to any one of claims 1 to 7; and
a cooling device, which is configured to cool the workpiece discharged from the induction heating apparatus.

9. An induction heating method for inductively heating rotatable workpieces to a target temperature by energizing a heating coil arranged on an outside of a linear guiding conveyance path while conveying the workpieces along the guiding conveyance path, the induction heating method comprising simultaneously rotating and conveying each of the workpieces sequentially introduced into the guiding conveyance path.

10. The induction heating method according to claim 9, wherein each of the workpieces sequentially introduced into the guiding conveyance path is conveyed while being rotated under a non-contact state with an adjacent one of the workpieces.
